# EUROPEAN PATENT SPECIFICATION

(11) **EP 3 353 520 B1**
(45) Date of publication and mention of the grant of the patent: **11.08.2021**
(21) Application number: 16847680.2
(22) Date of filing: 21.09.2016
(51) Int. Cl.: G01M 17/03, B62D 55/08, B62D 55/24, B62D 55/26, G01C 22/00, G01P 1/02, G01R 33/02

(54) **SMART TRACK SYSTEM HAVING EMBEDDED SENSORS AND METHOD OF USING THE SAME**
INTELLIGENTES SPURSYSTEM MIT EINGEBETTETEN SENSOREN UND VERFAHREN ZUR VERWENDUNG DAVON
SYSTÈME DE PISTE INTELLIGENTE COMPORTANT DES CAPTEURS INTÉGRÉS ET SON PROCÉDÉ D'UTILISATION

(30) Priority: 21.09.2015 US 201562221455 P
(43) Date of publication of application: 01.08.2018
(73) Proprietor: Soucy International, Inc., Drummondville, Québec J2B 6W3 (CA)
(72) Inventor: TODD, André, Mont St-Hilaire, Québec J3H 6J4 (CA); BIBEAU, Sylvain, Drummondville, Québec J2B 7B7 (CA); DEVIN, Charles, Windsor, Québec J1S 2Y3 (CA)
(74) Representative: BCF Global
(86) International application number: PCT/CA2016/051102
(87) International publication number: WO 2017/049393

(56) References cited:
- EP-A2- 0 798 241
- EP-A2- 1 291 270
- WO-A1-2016/138592
- WO-A1-2017/000068
- JP-A- S6 428 080
- JP-A- 2006 315 659
- US-A1- 2004 196 147
- US-A1- 2007 256 485
- US-A1- 2008 089 385
- US-B1- 8 985 250

## Description

### Field of the Invention

The present invention generally relates to an elastomeric track that is installed on traction assemblies of tracked vehicle or on traction assemblies used as wheel replacements for wheeled vehicles. More particularly, the present invention relates to an elastomeric track that comprises embedded sensors for sensing a variety of conditions during use of the vehicle and capable of communicating the sensed information to the driver of the vehicle, to the vehicle control, or to send the information to a third party such as to the dealer or manufacturer.

### Background of the Invention

Endless elastomeric tracks have been increasingly used for a vehicles operating in a variety of terrain conditions.

As a matter of fact, large traction bands used on large and/or heavy vehicles are generally already at their maximum possible thickness. Any overall increase of thick would bring unwanted results.

Indeed, when rubber and/or elastomeric material bends, the bending of the material generates heat. On small tracks, the heat generation is relatively low and easily dissipated due to the small volume to surface ratio. However, on larger tracks, the heat generation is substantially high and less easily dissipated due to the higher volume to surface ratio. Agricultural machines can use rubber tracks for reduced ground compaction. A disadvantage of rubber tracks, when compared with tires, is that one can drive only for a limited time before the belt tends to overheat. This can lead to early failure.

The increased use of endless track as led to the discovery that some conditions may prove extreme for such endless track resulting in damaging of the track from various factors such as overheating of the endless track. Overheating of the track is one of the conditions where a lack of knowledge from the user regarding the capabilities of an endless track may have devastating consequences. Indeed, once such a track is damaged, it generally has to be completely replaced by a new elastomeric track. This can be particularly troubling and could have been prevented had the overheating condition been mitigated.

US 9,033,431 discloses a track assembly of a tracked vehicle. The track assembly comprises a plurality of wheels which comprises a drive wheel and a plurality of roller wheels, as well as an elastomeric endless track disposed around the plurality of wheels for engaging the ground. The system as disclosed may comprise a temperature sensor mounted on a surface of the mid-roller and linked to a controller via a wireless link or a wired link. When a temperature of the mid-roller sensed by the temperature sensor reaches a certain threshold, the controller causes activation of a fan to lower the temperature of the mid roller. This prior art document measures the temperature of the wheel. Hence it fails to inform the user about the condition of the track itself. It is desired to know the temperature of the track directly yet known track system equipped with sensors fail to provide such information. In addition, measurement of the surface of the wheel (rotating member) with a sensor mounted on the wheel fails to provide adequate information concerning the condition of the track band while in use. In addition, the temperature of the wheel is not much representative of the internal temperature of the track because the rubber is highly heat-insulating.

US 8,985,250 discloses a method for managing a drive mode of a tracked vehicle, including reading an output of a sensor and, in response to the output of the sensor, performing a control action to manage the drive mode of the vehicle. The track system as disclosed in US 8,985,250 comprises pressure sensors configured to only measure force of a level of slip between track and sprocket. The torque level is not an accurate indication of how much the track heats up. While this known system provides a solution for controlling the tension in the tracked system or limits the maximum torque of the engine or too sudden torque increase, it fails to provide adequate solution for adequately measuring the temperature of a traction band while in operation. While this system may help to prevent breakage of the traction lug, it fails to indicate to the user or to a third party the temperature of the traction band.

WO 2017/000068, which document concerns prior art according to Article 54(3) EPC, discloses systems and methods for monitoring a track system of a vehicle.

JP S6428080 discloses a pneumatic caterpillar body including a carcass on a hollow annular body.

JP 2006-315659 discloses a tire capable of easily and accurately performing temperature management in order to determine a vulcanization time during a molding step of the tire.

US 2004/196147 discloses a tire including five temperature sensors embedded in the tire tread above or under the radial or carcass during manufacturing.

EP 0 798 241 discloses a conveyor belt including transponders inserted in the cover layer and/or carcass.

Known systems fail to teach or suggest solutions to actively or passively control overheating traction bands. Known solutions to reduce heat in track system only concerns the activation of cooling systems such as fans, to lower the temperature of the mid rollers. Such a cooling system would be grossly insufficient to lower the temperature of an overheating track in part because the rubber track is not conductive enough to cool the inside of the track.

Hence, despite ongoing development in the field of traction bands and endless tracks, there is still a need for a novel endless band which mitigates the shortcomings of the prior art and which addresses the needs of traction bands and endless tracks used particularly on heavy tracked vehicles.

### Summary of the Invention

The shortcomings of the prior art are generally mitigated by providing **a track system of a vehicle according to claim 1. The present application also concerns** an endless track having embedded sensors configured for detecting a variety of track conditions and inform the driver of the vehicle to prevent heat related damages of the endless track or control the vehicle itself directly to prevent track damage.

It is an aim of the present disclosure to provide an intelligent endless track having one or more sensors embedded therein. According to the invention, the sensors are embedded in the drive lugs and the carcass. The inclusion of sensor elements in the endless track is desired to obtain information about the endless track at various moment during use and/or thereafter. The sensors may sense different variables of the endless track such as its temperature, speed, geographical location, hours of use, mileage, distance covered, vibration level (state of the track system), etc.

It is a further aim of the present disclosure to provide an endless track having sensors able to wirelessly communicate to the driver of the vehicle or to the vehicle or others such as the manufacturers/dealer in real time while the vehicle operated or as an information given after operation once data has been collected and stored outside of the sensors. The communication to the driver may be through the vehicle dashboard or through secondary devices added thereto. The track sensors could enter in communication with the vehicle to actively monitor or passively notify the user wirelessly via the vehicle interface, smartphone, tablet, or any other technologically suitable device. The sensors may be continuously connected to the vehicle or communicate at various time intervals to optimise use of the sensor power.

In accordance with the teachings of the disclosure, there is disclosed an endless track having sensors embedded therein. The sensors may collect a variety of information about the endless track. Sensors may collect a single variable (i.e. temperature) or multiple variable (i.e. geolocation, speed, and miles of usage). Therefore, the present disclosure regards both single variable sensors and multiple variable sensors. Some embodiments of the endless track may comprise various different types of sensors embedded therein.

It is a further aim of the present disclosure to provide, an endless track having sensors embedded at various position in the endless track.

It is a further aim of the present disclosure to provide a smart traction assembly having sensors for sensing track variables. The sensors are located in the endless track. Therefore, the smart traction assembly is suited with the necessary sensors to monitor the condition of the endless track during and after operation of the tracked vehicle.

In accordance with the teachings of the disclosure, the endless track sensors may communicate with the tracked vehicle and/or the equipment while in use. Such communication may therefore be used to notify the user of the vehicle regarding certain conditions during or after usage. The sensors data may also be stored to be used for further use, such as optimisation of the track system settings.

It is a further aim of the disclosure to provide endless track sensors having the ability to wirelessly/remotely communicate information to a user or operator of the tracked vehicle. The remote communication may be enabled via the vehicle interface, using smart devices such as smart phone or table computers, personal computer or corporate servers. As such, various modes of communication may mediate the information between the track sensors and the user.

It is a further aim of the disclosure to provide a smart track system having a remote connection configured to collect GPS coordinates of the track for monitoring of the location of the vehicle and for instance intelligently manage the track condition by inferring the type of terrain from the GPS positioning of the track system.

It is a further aim of the present disclosure to provide a smart track system designed to unload/modulate the tracked vehicle power according to the track setting and/or from information derived therefrom. The smart track system could in real time adapt the power of the tracked vehicle to the condition i.e. temperature of the track. As such, the tracked vehicle could use the information from the endless track sensors to modulate the speed of the vehicle or the driving conditions. In response to changing conditions, the track information may be used to modulate the use of damper affecting the driving conditions. The modulation of the power or driving condition may thus prevent overheating of the endless track. For instance, upon detection of a certain threshold temperature or repeated reading of the increasing temperature, the vehicle could modulate the driving conditions to prevent further increases in the temperature often resulting in damages to the endless track. The vehicle could also monitor the conditions (i.e. the track temperature) and alert the user that the present driving conditions may affect the track performance and/or damage the track if maintained over a prolonged period.

It is a further aim of the present disclosure to provide a smart track system wherein the sensor information is secured (i.e. through encryption of the storage and communication).

In accordance with the teachings of the disclosure, a smart track system could be configured to wirelessly transfer track information to the manufacturer servers.

It is a further aim of the present disclosure to provide a smart track system having sensors transmitting information for various purposes. The transmission of information from the sensors may as previously mentioned, be for alerting the user, a company, a manufacturer of a certain condition in the track that requires instant attention. The alert may inform of a need for maintenance, self-alignment, engine derating - limp home, reduction of speed, in case of stealing of the tracked vehicle and/or stealing of the track.

The present disclosure therefore provides an additional marketing tool for manufacturer and distributor of the tracked vehicle and track system.

According to a not-claimed example, there is provided a controller for a vehicle comprising a continuous track for vehicle propulsion, wherein the controller is configured to process a track parameter determined by track sensors, such as track temperature; and compare the parameter with known operational threshold values of the track system. It may also determine if the measured parameter is lower than the operational threshold values of the track system and generate an output signal for the vehicle in accordance with a result of the comparison of the parameter value with the operational threshold value.

The controller may anticipate heating behavior of the track from previous temperature patterns and vehicle driving conditions. Accordingly, such a system could alert the user and/or manufacturer of a certain track condition before the undesired condition is actually sensed by the smart track sensor. For instance, rapid rising in the track temperature at a critical point could be associated with an early detection warning concerning the condition of the track. The user may act according to the early warning system and have the track repaired before total track failure.

The controller may be further configured to: process an ambient temperature value indicative of an ambient temperature associated with the vehicle, which may be representative of the immediate surroundings of the vehicle; and set/determine the overheating parameter value and/or the threshold value in accordance with the ambient temperature value and compare the overheating parameter value with the sensed temperature within the track.

The controller may be further configured to: process a machine weight value indicative of a weight of the vehicle; and set/determine the overheating parameter value and/or the threshold value in accordance with the machine weight value, the overheating parameter being dependent on the vehicle weight. Accordingly, the controller would compare the determined threshold value with the sensed value within the traction band.

The controller may be further configured to: process an accessory weight value indicative of a weight of an accessory of the vehicle; and set/determine the overheating parameter value and/or the threshold value in accordance with the accessory weight value.

The vehicle may be a combine harvester or a forage harvester. The vehicle accessory may be a header for the combine harvester or forage harvester.

There may be provided a vehicle, such as an agricultural vehicle, comprising any controller disclosed herein.

The output component may be an actuator configured to set a parameter of the vehicle or may be a user interface.

The user interface may be a visual user interface such as a display screen, an LED or other light, an audio user interface such as a loudspeaker or a buzzer, or any other user interface that provides an identifiable signal to a user.

According to a not-claimed example, there is provided a method of operating a controller for a vehicle comprising a continuous track for vehicle propulsion, the method comprising:
receiving a temperature value indicative of the temperature of the track band;
comparing the temperature value with a threshold value such as an overheating temperature value, wherein the threshold value is representative of undesirable operation for the continuous track; and
generating an output signal for the vehicle in accordance with a result of the comparison of the temperature value with the threshold value.

There may be provided a computer program, which when run on a computer, causes the computer to configure any apparatus, including a controller, a vehicle or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples.

The computer program may be provided on a computer readable medium, which may be a physical computer readable medium such as a disc or a memory device, or may be embodied as a transient signal. Such a transient signal may be a network download, including an internet download.

Other and further aspects and advantages of the present invention will be obvious upon an understanding of the illustrative embodiments about to be described or will be indicated in the appended claims, and various advantages not referred to herein will occur to one skilled in the art upon employment of the invention in practice.

### Brief Description of the Drawings

The above and other aspects, features and advantages of the invention will become more readily apparent from the following description, reference being made to the accompanying drawings in which:
Figure 1 is an outer perspective view of a portion of a traction band having sensors embedded therein according to one embodiment;
Figure 2 is an inner perspective view of a portion of a traction band having sensors embedded therein according to another embodiment;
Figure 3 is an outer perspective view of a portion of a traction band having sensors embedded therein according to another embodiment;
Figure 4 is an inner perspective view of a portion of a traction band having sensors embedded therein according to another embodiment;
Figure 5 is an outer plan view of a portion of a traction band having sensors embedded therein according to another embodiment;
Figure 6 is an inner plan view of a portion of a traction band having sensors embedded therein according to another embodiment;
Figure 7 is a lateral view of a portion of a traction band having sensors embedded therein according to another embodiment;
Figure 8 is a side perspective view of a track system comprising a traction band incorporating the principles of the invention;
Figure 9 is an inner perspective view of a traction band having an exemplary embodiment of a piezo electric power unit and a capsule that may contain several sensors embedded therein;
Figure 10 is an outer perspective view of a portion of a traction band having sensors embedded therein according to one embodiment;
Figure 11 is an inner perspective view of a portion of a traction band having sensors embedded therein according to another embodiment;
Figure 12 is an outer perspective view of a portion of a traction band having sensors embedded therein according to another embodiment;
Figure 13 is an inner perspective view of a portion of a traction band having sensors embedded therein according to another embodiment;
Figure 14 is an outer plan view of a portion of a traction band having sensors embedded therein according to another embodiment;
Figure 15 is an inner plan view of a portion of a traction band having sensors embedded therein according to another embodiment;
Figure 16 is a lateral view of a portion of a traction band having sensors embedded therein according to another embodiment;
Figure 17 is a side perspective view of a track system comprising a traction band incorporating the principles of the invention;
Figure 18 is a schematic representation process of a controller for a vehicle for aftermarket tracks;
Figure 19 is a schematic representation process of a controller for a vehicle for OEM tracks;
Figure 20 is a see through perspective view of an exemplary piezoelectric generator module;
Figure 21 is a see through side elevation view of the exemplary piezoelectric module of Fig. 20;
Figure 22 is a cross sectional view of an exemplary embodiment of a track having sensors embedded therein;
Figure 23 is a side elevation view of an exemplary embodiment of the track of Fig. 22;
Figure 24 is a see through perspective view of another exemplary embodiment of a portion of a track system having a sensor embedded therein;
Figure 25 is a longitudinal perspective view of a traction band having a sensor module embedded in the drive and guide lugs;
Figure 26 is a lateral perspective view of a traction band having a sensor module embedded in the drive and guide lugs; and

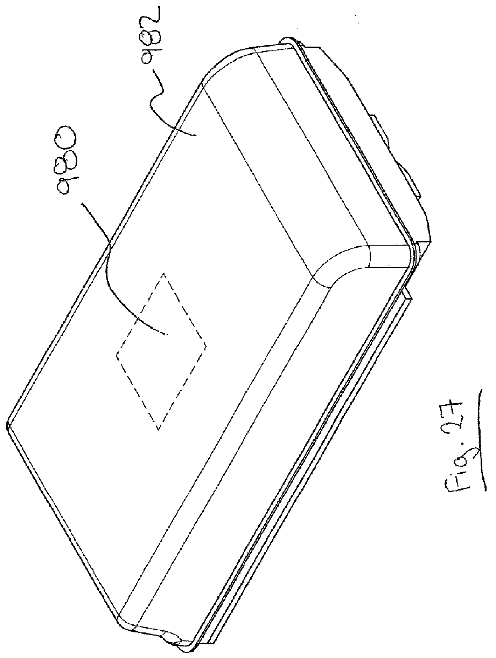

Figure 27 is a perspective view of a track pad having sensors embedded therein.

### Detailed Description of the Preferred Embodiment

A novel smart track system 200, 600 having embedded sensors and method of using the same will be described hereinafter. Although the invention is described in terms of specific illustrative embodiments, it is to be understood that the embodiments described herein are by way of example only and that the scope of the invention is not intended to be limited thereby.

Unless specified otherwise, the use of the expression track herein refers to traction band, endless tracks or bands, elastomeric tracks or band, composite tracks or bands (elastomeric and steel combination) or a steel track with rubber track pads or the like. Unless specifically defined, the use of the term sensor refers to thermocouple sensors, accelerometer sensors, gyroscopic sensors, magnetometer sensors and GPS sensors. Lugs as used herein could also be referred as tooth or teeth of the traction band.

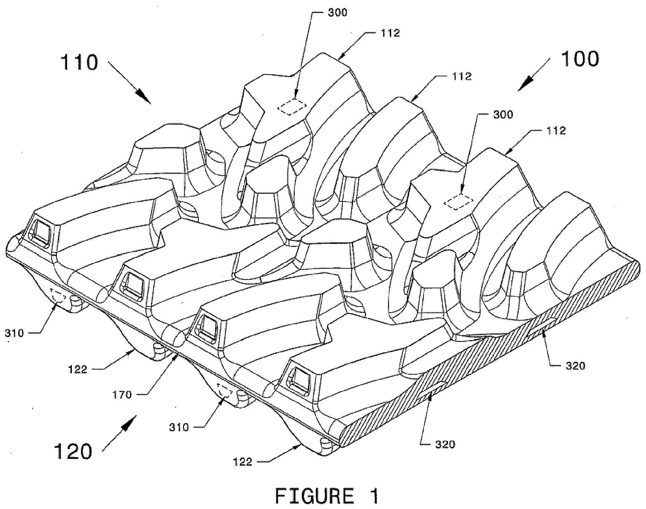

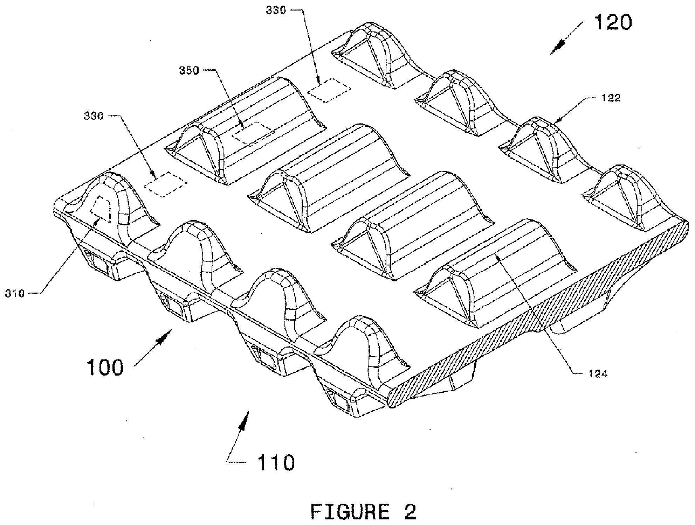

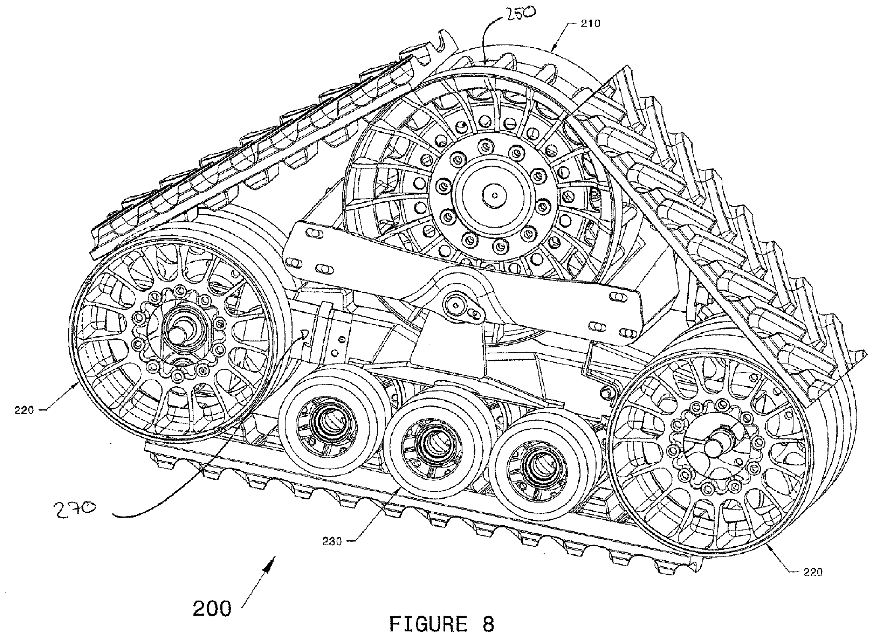

Referring first to Figs. 1 and 2, according to one embodiment, a track 100 incorporating the principles of the invention is illustrated. The track 100 according to the present embodiment is preferably made of rubber and/or elastomeric material and comprises a plurality of preferably substantially non-flexible lug areas 112, 114 separated by flexible hinge areas 170. Understandably, the track 100 comprises an outer ground engaging surface 110 and an inner wheels engaging surface 120. The track 100 is generally adapted to be used with a track system such as the track system 200 shown in Fig. 8 generally used in agricultural vehicle.

Referring now to Fig. 8, the track system 200 comprises a drive wheel 210 configured to be mounted to the axle (not shown) of the vehicle (not shown). The drive wheel 210 defines a rotation axis about which it rotates. The drive wheel 210 comprises, along its periphery, a plurality of evenly disposed sprocket teeth or openings 250 configured to engage drive lugs 124 located on the inner surface 120 of the traction band 100. In the present embodiment, the drive wheel 210 is a sprocket wheel having openings 250 to receive the drive lugs 124 instead of teeth engaging drive lugs 124. The track system 200 also comprises a frame assembly 270 mounted to the vehicle frame. Understandably, though the frame assembly 270 can pivot with respect to the drive wheel 210, the frame assembly 270 does not rotate with the drive wheel 210 as the frame assembly 270 is not drivingly engaged to the drive wheel 210. Though in the present embodiment, the frame assembly 270 is pivotally mounted to the drive wheel 210, in other embodiments, the frame assembly could be configured to be mounted directly to the vehicle, typically to its frame. In such embodiments, the frame assembly 270 would typically comprise an attachment frame or assembly configured to secure the frame assembly 270 to the vehicle. Track systems such as track system 200 are generally known in the art and need not be further described.

Now referring to Fig. 1, according to an embodiment, the smart track system 200, comprises a track 100 having sensors 300, 310, 320 embedded within the track band. The width of the track 100 may vary according to the various types of tracked vehicle and their applications. The outer surface 110 is typically provided with a series of outer or ground-engaging traction lugs 112 and 114 disposed longitudinally along the outer circumference of the traction band 100. Typically, the traction lugs 112 are disposed such as to define a thread pattern. In the present embodiment, the thread pattern generally follows a chevron pattern. Still, other thread patterns are possible; the present invention is thus not so limited. For its part, the inner surface 120 is typically, but not necessarily, provided with one or more rows of inner lugs such as drive lugs 124, adapted to cooperate with a sprocket wheel, and guide lugs 122, adapted to guide the traction band 100 around the sprocket wheel, the idler wheels and the road wheels. The guide lugs 122 and the drive lugs 124 are normally longitudinally disposed along the inner circumference of the traction band 100. The track 100 has a carcass 140 having an outer face 142 and an inner face 144. Drive lugs 124 are mounted on the inner face 144. Drive lugs 124 are generally made from elastomeric material.

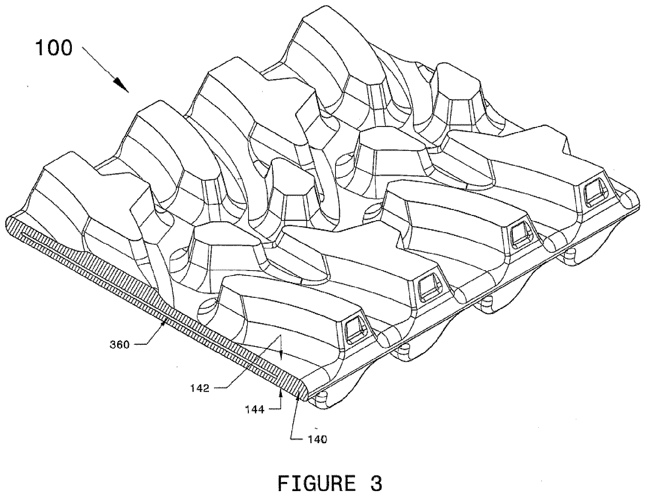

According to one embodiment, still referring to Fig. 1, sensors, 300 are embedded in the traction lugs. Accordingly, in the presence of a temperature sensor, the sensor 300 will sense the temperature of the traction lug. Sensors 320 are located in the carcass 140 (see fig. 3). Accordingly, again in the presence of a temperature sensor, the sensor 320 will sense the temperature of the carcass 140 and provide information to the user as to the temperature at the carcass level. Sensors 310 are located in the guide lugs, 122. According to this configuration, in the presence of a temperature sensor, the sensor 310 will sense the temperature at the guiding lug level. Having sensors at various positions along the track is desired to provide accurate information about the behavior of the track while in use. The various positions of the sensors 300, 310 and 320 will also provide important information to the user and/or manufacturer about the behavior of the track during use and aim to allow the manufacturer to obtain information concerning the behavior of the track system when used on a variety of terrains and vehicles.

According to another embodiment, now referring to Fig. 2, the sensors 330 are laterally inserted underneath area where the road wheel are in contact with the inner portion of the track band 100, between the guide and drive lugs 124. According to another embodiment, the sensor 350 is inserted under or within one of the drive lug 124.

According on another embodiment, now referring to Fig. 3, the sensors 360 are laterally inserted through the carcass 140 of the track band 100.

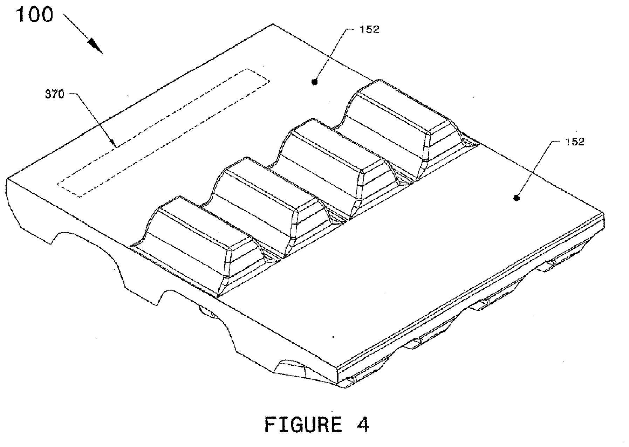

According to yet another embodiment, now referring to Fig. 4, sensors 370 are inserted longitudinally along the wheel path 152 of the track band 100.

According to one embodiment, sensors of the smart track system may be infrared sensors mounted to the track system and designed for measuring the track temperature at various intervals.

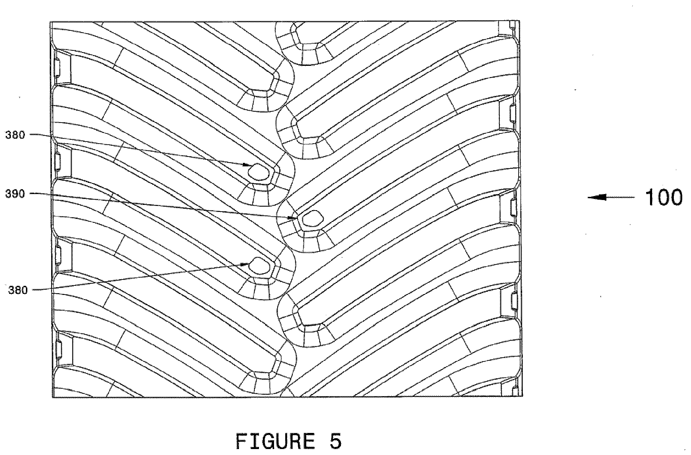

According to another embodiment, now referring to Fig. 5, sensors 380, 390 are inserted in the outer profile of the track band 100.

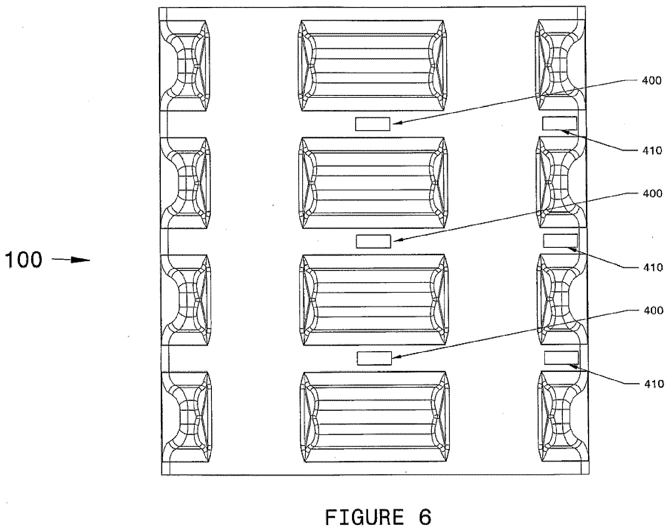

According to yet another embodiment, now referring to Fig. 6, sensors 400, 410 are inserted between drive lugs 124 and/or between guide lugs 122.

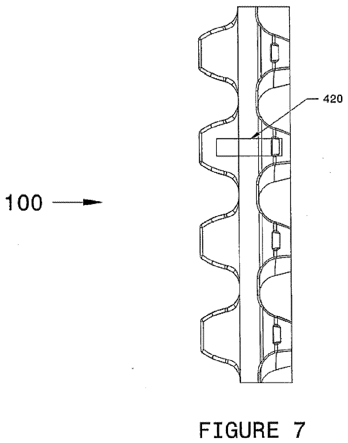

According to another embodiment, now referring to Fig. 7, sensors 420 are inserted through the carcass 140 in contact with both the outer and inner profiles.

According to embodiments, sensors may be chosen from the following depending on the desired condition or variable to be measure:
a. Temperature - Thermistors, thermocouples, RTD's, IC and many more.
b. Flow - Electromagnetic, positional displacement, thermal mass, etc.
c. Level Sensors - ultrasonic radio frequency, radar, thermal displacement, etc.
d. Proximity and displacement - photoelectric, capacitive, magnetic, ultrasonic.
e. Image - Charge coupled devices, CMOS
f. Gas and chemical - Semiconductor, Infrared, Conductance, Electrochemical.
g. Acceleration - Gyroscopes, Accelerometers.
h. Others - Speed sensor, mass, Tilt sensor.

According to embodiments, the embedded sensors may be powered using either stored energy or harvested energy. Accordingly, the sensors may be battery powered or powered by energy harvested or generated from systems such as a piezoelectric power generator. One such type of piezoelectric generator is a generator that generates energy from the vibrations resulting from the operation of the track systems.

According to other embodiments, the embedded sensors are powered using harvested energy derived from the pressure applied to the track or from the flexion of the track. As such, piezoelectric generator from pressure may be configured to power one or more sensors embedded within the track.

According to yet another embodiment, the embedded sensors are powered by induction. The induction charger mechanism is preferably used for powering the sensor while the track is not in operation. Therefore, a dealer may obtain information from the track sensors through the use of an induction charger. The induction charger substitute the piezoelectric sensor while the track not in operation or in movement. Accordingly, the induction charger is preferably used in combination with an piezoelectric generator.

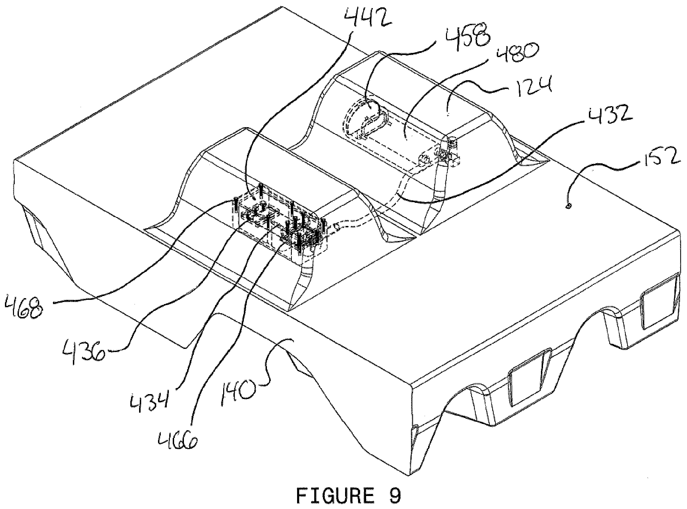

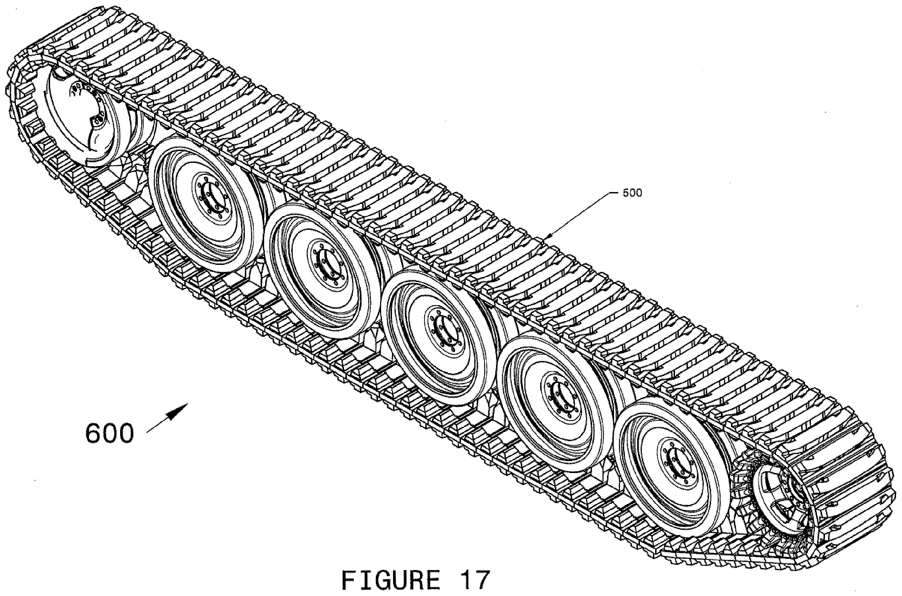

Referring now to Figs. 8 and 9, an exemplary embodiment of a sensor embedded in the traction band is shown. In this exemplary embodiment, the sensor is embedded within one of the drive lug 124 while the power system, the generator 442 is embedded within an adjacent drive lug 124, the sensor 480 and generator 442 are interconnected for the generator 442 to provide power to the sensor 480. In the presently illustrated exemplary embodiment, the power system 442 is a piezoelectric system configured to autonomously provide electrical power to the sensor 480. The piezoelectric generator comprises a base portion 466 holding an elongated strip of metal 434 cantilevered with a mass 436 hanging at the end and secured thereto using fasteners. As such, the change of direction of the track 100 on the wheels (drive 210 and idler wheels 220) causes an acceleration of the mass 436 (top down the track) therefore, the mass 434 having no real depreciation vibrates until the next change of direction (idler wheel). Each movement of the cantilevered metal strip 434 within the piezoelectric generator 442 capsule creates a small power. According to one embodiment, it is possible to adjust the mass 436 of the piezoelectric generator 442 to maximize power as a function of the geometry of the track assembly 200 and the vehicle speed. Therefore, the configuration of the piezoelectric system may be designed differently for different geometry of track systems 200. For instance, a piezoelectric generator 442 for track system 200 shown in Fig. 8 may be different from the piezoelectric generator 442 used for a track system 600 shown in Fig. 17. Since traction bands 100 for track systems do not have a constant centripetal force as opposed to wheel or tires, traction bands 100 may have their power generation maximized as a function of the geometry of the track assembly 200, 600 and the vehicle speed. However, since the power generation is generally maximized at average speed, the available power may be limited at low speed. As such, when the smart track system is used with such a power system while the vehicle operates low speed, the number of measurement acquired from the sensor may be lower than the number of measurement while operating at average speed. Likewise, at low speed, the instances of communication with the vehicle may be reduce according to the power available. The smart track system is configured to have accumulated a certain amount of energy before making routine measurements and sending data. According to one embodiment, when operating at low speeds the smart track system sends information to the vehicle every 5 min and while the smart track system generally sends the same information several times per second at the maximum speed of a vehicle (the vehicle may be an agricultural vehicle, an industrial vehicle or a defence vehicle such as an armour vehicle). Low speed is generally defined as corresponding to 10% of the maximum speed of the tracked vehicle or lower otherwise 3 km/h or below.

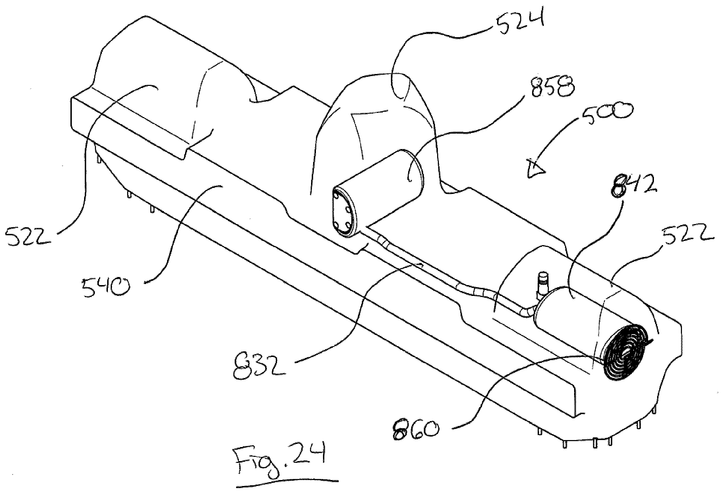

Still referring to Fig. 9, in the presently illustrated embodiment, the information is preferably processed by a small processor which is powered by the vibration of a piezoelectric generator, itself molded in the traction band with the sensors. Accordingly, the presently illustrated exemplary embodiment does not require the use of stored energy such as batteries. Therefore, in the absence of stored energy, when the track is stationary, the sensor is powered using power source other than the piezoelectric generator. While stationary, the sensors may be powered via wireless charger 860 to enable communication between the sensor and the vehicle module for data retrieval (see Fig. 24). The communication is generally achieved via radio frequencies to a small module in the vehicle cabin. The small module may display the information and/or transmit such information via Bluetooth to a smart device located within Bluetooth range but unhindered by the important quantity of metallic material present.

Still referring to Fig. 9, the sensor uses low voltage circuit and oversized elements for accumulation of energy. The piezoelectric is very large compared to other similar elements. According to the preferred embodiment, the size of the piezoelectric component is big enough to think prevent insertion of such piezoelectric component in a tire sensor since there is generally not enough space for this type of sensor given the large level possible deformation of vehicle tires. The capacitor system is also preferably larger to keep energy long enough for the sensor to be able to utilize the energy.

The capsule is generally configured to limit the pressure on the electronic elements. For temperature and curing time, it is generally preferred to avoid lithium batteries and other components that do not withstand such conditions (heat resistant cable cover, adhesives, capacitor or super capacitor may be used instead of batteries).

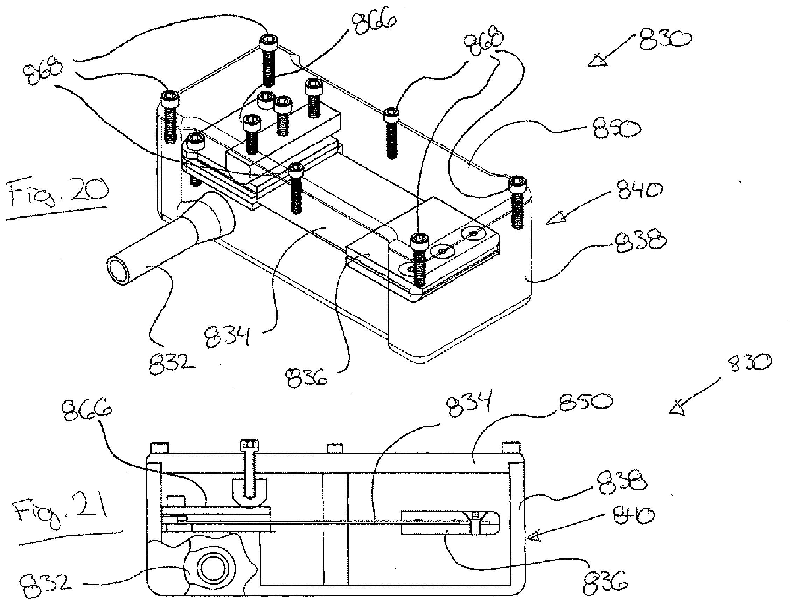

The capsule is generally responsible to protect the components. In addition, in the preferred embodiment, the capsule has at least half an inch of rubber covering. Furthermore, steel tubes 832 (see Figs. 20, 21 and 24) may be used for protecting cables from debris intrusion into the track.

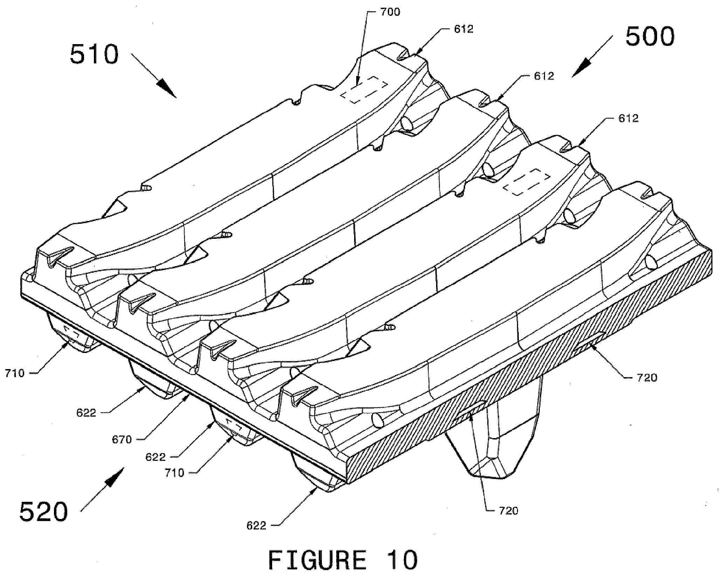

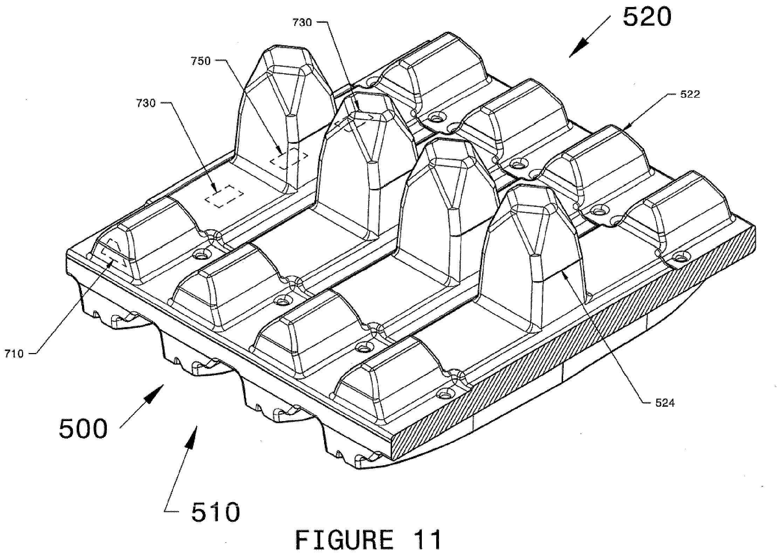

Referring now to Figs. 10 and 11, according to one embodiment, the smart track system may also be used for defence and military vehicle traction bands. The track 500 incorporating the principles of the invention with defense vehicle track system is illustrated. The track 500 according to the present embodiment is preferably made of rubber and/or elastomeric material and comprises a plurality of preferably substantially non-flexible lug areas 612, separated by flexible hinge areas 670. Understandably, the track 500 comprises an outer ground engaging surface 510 and an inner wheels engaging surface 520. The track 100 is generally adapted to be used with a track system such as the track system 600 shown in Fig. 17. Track systems such as track system 600 are generally known in the art and need not be further described.

Now referring to Fig. 10, according to an embodiment, the smart track system comprises a track 500 having embedded sensors 700, 710, 720. The width of the track 500 may vary according to the various types of tracked vehicle and their applications. The outer surface 510 is typically provided with a series of outer or ground-engaging traction lugs 612 and 614 disposed longitudinally along the outer circumference of the traction band 500. Typically, the traction lugs 612 are disposed such as to define a thread pattern. In the present embodiment, the thread pattern generally follows a repetitive pattern. Still, other thread patterns are possible; the present invention is thus not so limited. For its part, the inner surface 520 is typically, but not necessarily, provided with one or more rows of inner lugs such as drive lugs 522, adapted to cooperate with a sprocket wheel, and guide lugs 524, adapted to guide the traction band 500 around the sprocket wheel, the idler wheels and the road wheels. The drive lugs 522 and the guide lugs 524 are normally longitudinally disposed along the inner circumference of the traction band 500. The track 500 has a carcass 540 having an outer face 542 and an inner face 544. Guide lugs 524 are mounted on the inner face 544. Guide lugs 524 are generally made from elastomeric material. According to one embodiment, referring to Fig. 10, sensors, 700 are embedded in the traction lugs. Sensors 720 are located in the carcass 540. Sensors 710 are located in the drive lugs, 522.

According to another embodiment, now referring to Fig. 11, the sensors 730 are laterally inserted underneath area where the road wheel are in contact with the inner portion of the track band 500, between the guide and drive lugs. According to another embodiment, the sensor 750 is inserted under or within one of the guide lug.

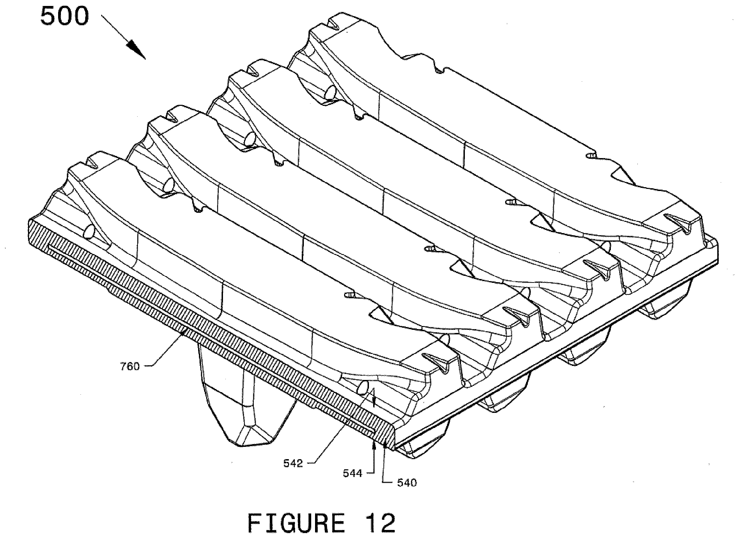

According on another embodiment, now referring to Fig. 12, the sensors 760 could be laterally inserted through the carcass 540 of the track band 500.

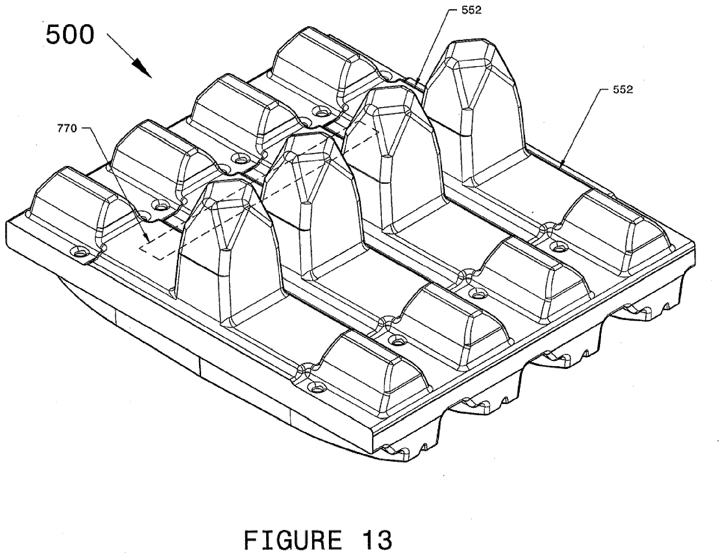

According to yet another embodiment, now referring to Fig. 13, sensors 770 could be inserted longitudinally along the wheel path 552 of the track band 500.

According to one embodiment, sensors of the smart track system may be infrared sensors mounted to the track system and designed for measuring the track temperature at various intervals.

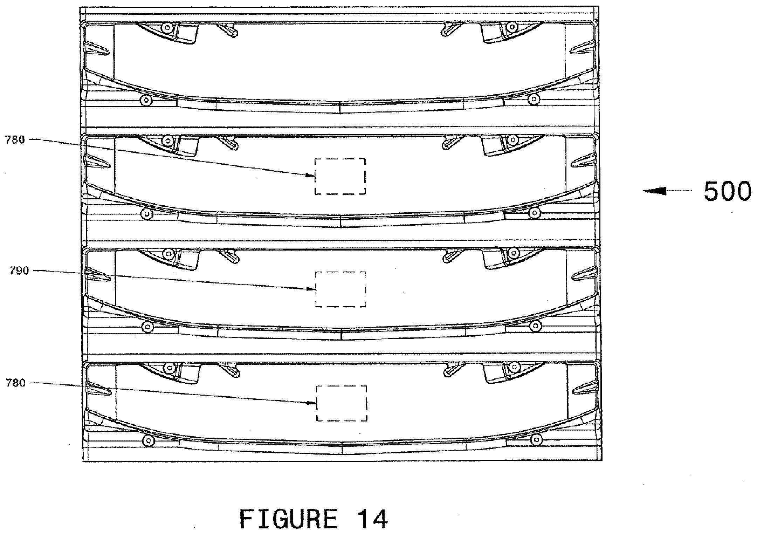

According to another embodiment, now referring to Fig. 14, sensors 780, 790 are inserted in the outer profile of the track band 500.

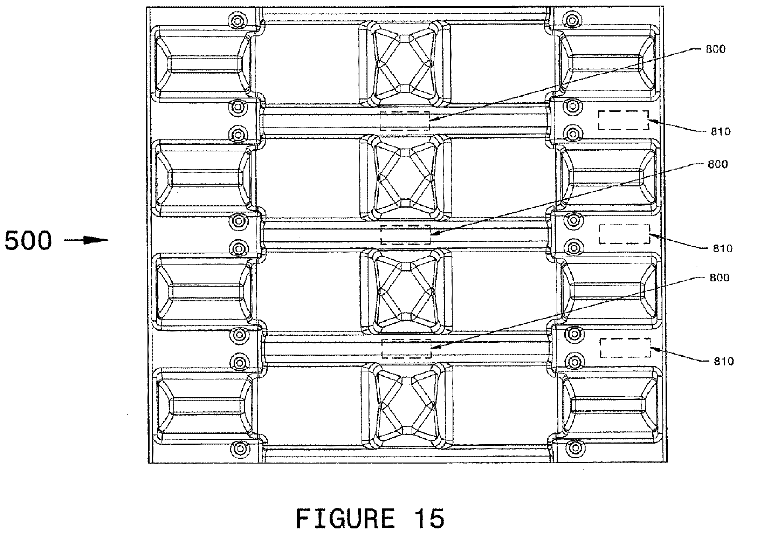

According to yet another embodiment, now referring to Fig. 15, sensors 800, 810 are inserted between drive lugs 522 and/or between guide lugs 524.

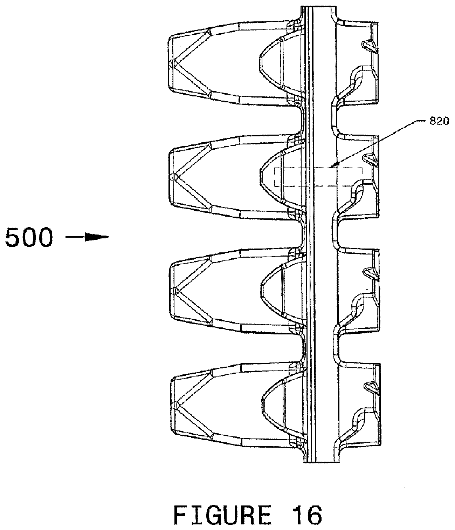

According to another embodiment, now referring to Fig. 16, sensors 820 are inserted through the carcass in contact with both the outer and inner profiles.

According to another embodiment, the smart track system 600 is provided with encryption capabilities to secure the sensor information (i.e. through encryption of the storage and communication). The use of encryption of the information may be desired for various military operations. Using such a system would enable the user to map the vehicles in operation using track information. The information gathered from the track sensors could also be used by a distributor or manufacturer in case of warranty claims. The information of the track condition could be used to inform the manufacturer that the user has utilised the vehicle beyond what was reasonable or has disregarded an alert from the track sensing system resulting in damages. In such cases, the manufacturer could use the track condition information to decline a warranty claim on the track system.

Unless specified otherwise, the following description applies to both agricultural and defence implementations of the smart track system 200, 600.

According to one embodiment, the smart track system 200, 600 comprises remote connection configured to collect GPS coordinates of the track for monitoring of the location of the vehicle and for instance intelligently manage the track condition by inferring the type of terrain from the GPS positioning of the track system. The endless track sensors may be in communication with a communication module to make the information available to the user of the tracked vehicle. In addition, the sensors may be able to wirelessly communicate the information to a remote location such as a control center for the operation of the tracked vehicle or to the manufacturer for continuous development of the vehicle and track systems. When the information is received by the vehicle, the tablet or smart phone, it may redirect the information to the cloud and collect in the databases of the company of the manufacturer/user to have information about the state of usage of the tracks and/or the vehicles, once the device reads the information the device may get in connection with the cloud. Devices may be used as antenna.

According to one embodiment, the sensors is autonomously powered and capable of measuring a variety of track parameters, such as acceleration, angular moment, displacement, magnetic field, geolocation, external thread temperature, guide lug temperature, drive lug temperature and carcass temperature.

According to another embodiment, the smart track system is comprised in a tracked vehicle having an engine and an undercarriage, the undercarriage comprising an endless track, a sprocket for driving the endless track and a sensor embedded within the track for measuring the temperature of the endless track when the sprocket drives the track. According to one embodiment, the endless track includes drive lugs meshing with the sprocket, the sensor sensing a temperature within one of the drive lugs. The vehicle typically having a first endless track on a first side of the undercarriage, a second endless track on a second side of the undercarriage opposite to the first side, the endless track being capable of being driven in a plurality of different speeds which include low speed mode and a high speed mode. The vehicle further comprising a control system for regulating the speed modes.

According to one embodiment, the smart track system comprises a plurality of sensors embedded with the track. The plurality of sensors may depending on the configuration be powered by individual power sources or being powered by the same power source. In the former, the plurality of sensors are positioned at various position on the track system and are each related to a power source. According to the latter the sensors are comprised within the same capsule and powered by the same power source. According to one embodiment, the piezoelectric generator is configured to power multiple of sensor each sensing a different track parameter.

According to yet another embodiment, the smart track system 200, 600 comprises a sensor that reads the temperature of the traction band and reads a magnetic signal emitted by the traction band. Magnetic signal emitted therefrom may comprise various information such as information about the make and model of the traction band. For instance, the track may comprise the serial number and date of manufacture of the track.

According to yet another embodiment of the present invention, the smart track system 200, 600 comprises a magnetometer for detecting the orientation of the capsule and deducing the number of rotation of the traction band and the speed of the traction band.

According to yet another embodiment, the smart track system 200, 600 comprises a thermocouple configured to determine the temperature of the traction lug. The temperature of the traction lug aims to inform the user and/or manufacturer whether the vehicle goes too fast compared to the vertical load applied on the track. The temperature of the traction lug also aim at indicating whether the alignment of the track is adequate and/or whether the longitudinal load is too large.

According to an exemplary embodiment, K-type thermocouples are used. K-type thermocouples are well adapted to the extent of the action required. It is important that the insulating material over the wires is compatible with the rubber or elastomeric material of the track so it does not generate discontinuity in the material when curing. According to the preferred embodiment, the thermocouple is inserted at the track hotspot, which is at one of the warmest point in the track. The hot spot will vary depending on the type of track, track assembly and tracked vehicle. For some tracks, the hot spot is found to be on the external thread under the road wheel path.

According to yet another embodiment, the smart track system 200, 600 may further comprise a battery which is recharged by the piezoelectric generator and yet allow the smart track system 200, 600 to have as much power available for measurement and communication while operating the vehicle at low speed.

According to one embodiment, the smart track system 200, 600 sensor uses redundancy and sends a communication system (protocol) that allows radio signal loss inconsequential. As such, the smart track system 200, 600 is able to communicate with the vehicle module even in the presence of all the metallic components that generally hinders communications systems. Since the sensors uses redundancy, the vehicle module may exhibit signal interferences and only receive the signal intermittently while still receiving the accurate information from the track system sensors.

In addition, some embodiments of the smart track system 200, 600 comprises an external antenna located to the furthest possible point of the metallic structure while being contained in the traction band. Consequently, the external antenna, improves the communication capability of the sensor while remaining embedded within the traction band.

Since all parts of the traction band are subject to important stress and/or significant deformation during uses, the smart track system 200, 600 comprises a capsule system to secure the electronics within the track system and mitigate damages that could be sustained while the traction band is in operation. It is thus a significant aspect to limit the potential damage likely to arise to the sensors so that the smart track system 200, 600 does not decrease the lifespan traction band. The smart track system 200, 600 is designed to function while operation of the track system result in crushing of the track with elements and/or solid debris. Ex: (A rock between a wheel and the track).

According to embodiments, the smart track system 200, 600 provides an additional marketing tool for manufacturer and distributor of the tracked vehicle and track system. The communication between the track and the user, manufacturer and/or distributer may be used to notify the users of the newly available product (related or not to previous purchases), inform of maintenance suggestion, continuous development of the product, planning of returns of exchanges of products, inform of maturity schedule of the guarantee, promotions, statistic related to the usage of the tracked vehicle, etc.

According to embodiment, the smart track system comprises a battery system that may be inserted before curing or post curing. Since using the track typically generates high temperatures from the bending of the various sections, batteries have to be configured to withstand the high temperatures. Therefore, in the preferred embodiment, solid state batteries are used. For instances, copper batteries may be used. For smaller vehicle where track temperature is lower, rechargeable lithium batteries may be suitable provided that the batteries are inserted post molding and that the temperature of the track while in operation is lower than the threshold temperature for preventing overheating of the lithium batteries.

According to one embodiment, the sensor may be embedded within the track post molding. The process for inserting the sensor capsule in the track generally comprises the steps of making a hole in the track, inserting the capsule, securing the capsule to the track and filling the remaining portion of the hole with elastomeric material. Optional reinforcing elements may also be used to solidify the structure weakened by the removal of elastomeric from the track. According to one embodiment, it is possible to also add a battery to the capsule. However, the size available to hold a battery is generally only the size able to house a battery for half the useful life of the track assuming that system losses are limited. One may force the volume it is possible to have a battery for the full useful life of the track. The presence of the connected wire in different consecutive lugs is generally the limiting factor since inserting component in the lugs generally increases the risk of discontinuity and breaks in the track. In addition, the more items there are within the lugs, the more likely it is that bending of the track will cut or damage the wire. According to one embodiment, the sensor and energy generator are located within the same lug, thus mitigating the likelihood of wire breakage from bending of the track.

According to embodiments, the capsules containing the sensor and energy generators are preferably built from aluminum. Aluminium is preferably used to prevent the capsule to interfere with the magnetic field. As such, the magnetic field is allowed through the capsule in order for the magnetometer to read the rotations of the track.

The capsules are configured to be pressure resistant and protect the sensor components from the molding process. The capsule allows the sensor components to withstand important pressure while operation of the vehicle with the track systems. According to the preferred embodiment, the pressure resistant capsule is appropriately bonded to the track elastomeric material while molding to ensure adequate integration of the capsule within the traction band.

According to one embodiment, the capsule are inserted within the track as far as possible from the outside surfaces of the traction lug for the rubber to absorb impacts or collisions with external elements. Being away from outer surface aims at mitigating the discontinuity in the rubber or elastomeric material arising from the insertion of the capsules. Accordingly, the track is able to be deformed as needed. As outlined above, the capsule preferably has half an inch or more of rubber or other elastomeric material thereon.

According to one embodiment, the sensors are disposed on every lugs, every two lugs, at regular intervals on a definite number of lugs. Other embodiments may have sensors disposed on replacement lugs, especially for segmented traction band wherein some sections of the track may be substituted by other sections. In segmented tracks, a smart replacement traction band segment could replace an existing traction band segment and transform a conventional traction band to a smart traction band having sensing capabilities.

Advantageously, when multiple temperature sensors are provided on the track 500, each temperature sensor being mounted to a respective drive lug, each temperature sensor is uniquely identified such that its temperature reading can be distinguished from temperature readings of other temperature sensors. Digitally encoding the temperature reported by the temperature sensor and appending to the temperature value a unique identifier can accomplish this. In this fashion, the receiver and the data processing unit that performs the analysis of the temperature values reported by the temperature sensors can associate received temperature values to respective drive lugs.

According to other embodiments, the sensors such as temperature sensors are inserted in the track system post molding. The process for inserting a sensor in a track post molding would generally comprise the steps of making an opening in the track, inserting the sensor capsule having the sensor component therein and inserting the power capsule, filling the opening. Additionally, the opening may be reinforced using reinforcing element before filling the opening with an elastomeric material. According to one embodiment, the opening could be secured using metallic insert embedded in the track carcass. According to yet another embodiment, the sensors are inserted in the track through traps which are integrated within the track during molding.

A vehicle module (not shown) mounted on a suitable location on the vehicle picks up the output of the temperature sensor. The vehicle module acts as receiver. The output is a signal reporting temperature of the track. The signal is processed by a data processing device also comprised in the vehicle module that will determine the maximum speed sustainable by the track. The data processing device will then generate a control signal to perform a control function.

The endless track sensors are designed to wirelessly/remotely communicate information to a user or operator of the tracked vehicle. The remote communication is enabled via the vehicle interface, using smart devices such as smart phone or table computers, personal computer or corporate servers. As such, various modes of communication may mediate the information between the track sensors and the user.

The remote connection may be used to collect GPS coordinates of the track for monitoring of the location of the vehicle and for instance intelligently manage the track condition by inferring the type of terrain from the GPS positioning of the track system. The endless track sensors may be in communication with a communication module to make the information available to the user of the tracked vehicle. In addition, the sensors may be able to wirelessly communicate the information to a remote location such as a control center for the operation of the tracked vehicle or to the manufacturer for continuous development of the vehicle and track systems. When the information is received by the vehicle, the tablet or smart phone, it may redirect the information to the cloud and collected in the databases of the company of the manufacturer/user to have information about the state of usage of the vehicle, once the device reads the information the device may get in connection with the cloud. Devices may be used as antenna.

According to embodiments, the smart track system 200, 600 is also designed to unload/modulate the tracked vehicle power according to the track setting and/or from information derived therefrom.

According to embodiments, the smart track system 200, 600 sensor information are secured (i.e. through encryption of the storage and communication). The use of encryption of the information may be desired for various military operations. Using such a system would enable the user to map the vehicles in operation using track information. The information gathered from the track sensors could also be used by a distributor or manufacturer in case of warranty claims. The information of the track condition could be used to inform the manufacturer that the user has utilised the vehicle beyond what was reasonable or has disregarded an alert from the track sensing system resulting in damages. In such cases, the manufacturer could use the track condition information to decline a warranty claim on the track system.

According to embodiments, the smart track system 200, 600 is also designed to unload/modulate the tracked vehicle power according to the track setting and/or from information derived therefrom. The smart track system 200, 600 could in real time adapt the power of the tracked vehicle to the condition i.e. temperature of the track. As such, the tracked vehicle could use the information from the endless track temperature sensors to modulate the speed of the vehicle or the driving conditions in accordance with the track having the highest temperature reading. In response to changing conditions, the track information may be used to modulate the use of damper affecting the driving conditions. The modulation of the power or driving condition may thus prevent overheating of the endless track. For instance, upon detection of a certain threshold temperature or repeated reading of the increasing temperature, the vehicle could modulate the driving conditions to prevent further increases in the temperature often resulting in damages to the endless track. The vehicle could also monitor the conditions (i.e. the track temperature) and alert the user that the present driving conditions may affect the track performance and/or damage the track if maintained over a prolonged period.

According to embodiments, the smart track system 200, 600 comprises a controller which is configured to: process an accessory weight value indicative of a weight of an accessory of the vehicle; and set/determine the overheating parameter value and/or the threshold value in accordance with the accessory weight value. The accessory weight value may be indicative of the presence or absence of a vehicle accessory. The accessory weight value may be indicative of a type of vehicle accessory. As such, depending on the weight value, the controller may vary the expected temperature increase pattern within the track system and anticipate that an increase in temperature while the weight value is higher will require an action to mitigate the increase of temperature sooner than without any accessory. As such, the controller would take into account multiple measurement before initiating any vehicle behavior change or before implementing any vehicle speed limitation due to temperature increase.

According to embodiments, it is disclosed a method of measuring the level of stress in the lugs by comparing the difference in temperature between the track drive lug and other portions of the track. In the embodiments where the sensors are located on the in the lug, the temperature measured is the temperature sensed in the various lugs. In embodiments where the sensors are on the profile of the endless track, the sensors may advise if the load is normal, advise of overload of the vehicle, advise of the adequacy of the ballast of the tracked vehicle, advise of the required maintenance of the track system (i.e. for destroyed or damaged wheel). Difference in temperature about various position within the track will give the user and or manufacturer important information about the condition of operation of the vehicle. In embodiments with multiple sensors on the track, the sensors may measure conditions such as the camber of the track, the alignment to actively control such conditions or notify the user of the detection of such conditions.

According to embodiments, it is disclosed a method of communicating between the user and the manufacturer/distributor through the vehicle interface or smart devices in communication with the tracked vehicle. As such, the user may have access to trouble shooting through the vehicle interface. In addition, the trouble shooting manuals may be updated through the use of the wireless communication between the manufacturer and the tracked vehicle, thus giving the user instant access to the updated material. Information for reaching maintenance, distributor and manufacturer may also be provided through the vehicle interface. Furthermore, the tracked vehicle may comprise a communication system interconnecting the user and a technical support representative from the manufacturer through wireless communication module suitably accessible in the vehicle interface. The use of smart systems in tracked vehicle may further give the user access to information regarding nearby distributor / dealers / mechanics. Such information may be available through the vehicle interface or prompted upon certain conditions sensed from the track system sensors.

According to embodiments, it is disclosed a method for making endless track having sensors embedded therein. The sensors are integrated to the track before molding of the elastomeric track or installed therein after the molding step. The sensors may be located in proximity to the traction teeth or lug, in the outer profile of the track, in the carcass and/or in the wheel track.

According to one embodiment, the sensors are assembled with the track in those parts of raw rubber preformed or not. The track structure is molded subsequently while the sensors are embedded within the track. The electronics are imprisoned in a rigid capsule that limits the pressure applied to the electronics.

Accordingly, the method for embedding sensors within the track comprises the steps of adjusting the volume of elastomeric material used to mold the track in order to limit the movement of the construction of the carcass.

The exterior of the capsule being adhered to the track body while molding to insure proper mounting of the sensor component to the track.

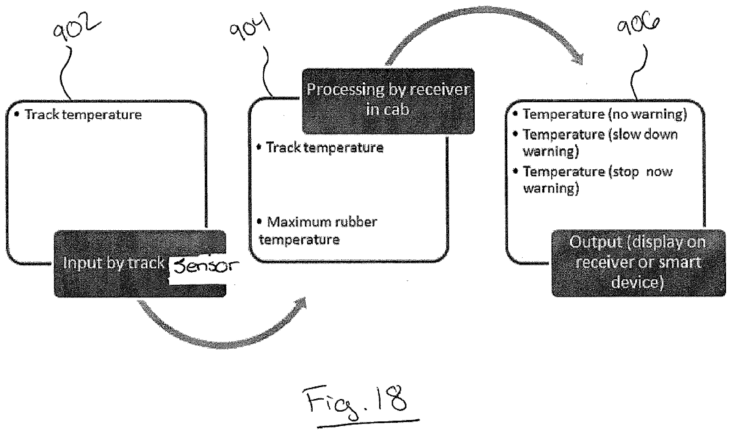

Referring now to Fig. 18, a method of preventing track damage in after market track is illustrated. The method comprises the steps of:
Sensing a track temperature using the embedded sensors;
Inputting the track temperature in the receiver;
Processing the track temperature by the receiver in the vehicle cab, and processing the maximum rubber temperature for the track;
Comparing the track temperature with a predetermined maximum rubber temperature; and
Outputting a warning to a display on the receiver or on a smart device according to one of the following indications: temperature (indication of the temperature of the track) with no warning, temperature with a slowdown warning or temperature and stop now warning.

Understandably, the warning message will be dependent on the temperature of the track and the proximity of the sensed temperature with the maximum rubber or track temperature for the specific track in use.

Alternately, the method of operating a controller for a vehicle comprising a continuous track for vehicle propulsion, the method comprising:
receiving a temperature value indicative of the temperature of the track band;
comparing the temperature value with a predetermined threshold value such as an overheating temperature value, wherein the threshold value is representative of undesirable operation for the continuous track; and
generating an output signal for the vehicle in accordance with a result of the comparison of the temperature value with the threshold value.

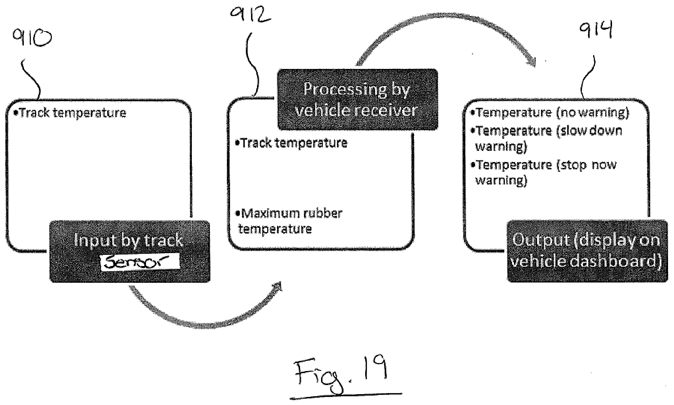

Referring now to Fig. 19, a method of preventing track damage in OEM smart track system 200, 600 is illustrated. The method comprises the steps of:
Sensing a track temperature using the embedded sensors;
Inputting the track temperature in the receiver;
Processing the track temperature by the receiver in the vehicle, preferably in the vehicle cab and processing the maximum rubber temperature for the track;
Comparing the track temperature with a predetermined maximum rubber temperature; and
Outputting a warning to the vehicle module display according to one of the following indications: temperature (indication of the temperature of the track) with no warning, temperature with a slowdown warning or temperature and stop now warning.

According to one embodiment, the smart track system 200, 600 controller configured to:
compare the overheating parameter value with sense temperature;
and generate a first output signal for the vehicle if the sensed temperature value within the traction band is less than the computed overheating threshold value for a specific set of parameter, the parameter may include vehicle weight, vehicle speed, terrain condition, outside temperature and the likes.

The first output signal may be an output signal indicative of there being no warning in relation to overheating of the continuous track or a signal indicating that closer monitoring and caution is required or some warning signal indication that overheating parameter have been reached and will actuate the power drive reduction system unless manually prevented by the vehicle driver.

The output signal may be configured to: provide an alert to an operator of the vehicle; and/or automatically control one or more operating parameters of the vehicle. The output signal may be configured to automatically control a ground speed of the vehicle based on the value sensed by the sensors embedded within the traction bands.

According to yet another embodiment, a method of measuring the level of stress in the lugs by comparing the difference in temperature between the track drive lug and other portions of the track is disclosed. In the embodiments where the sensors are located on the in the lug, the temperature measured is the temperature sensed in the various lugs. In embodiments where the sensors are on the profile of the endless track, the sensors may advise if the load is normal, advise of overload of the vehicle, advise of the adequacy of the ballast of the tracked vehicle, advise of the required maintenance of the track system (i.e. for destroyed or damaged wheel). Difference in temperature about various position within the track will give the user and or manufacturer important information about the condition of operation of the vehicle. In embodiments with multiple sensors on the track, the sensors may measure conditions such as the camber of the track, the alignment to actively control such conditions or notify the user of the detection of such conditions.

Referring now to Figs. 20 and 21, an exemplary of the piezoelectric generator is shown. The piezoelectric module 830 comprises a container or capsule 840 for containing the piezoelectric generator. The capsule 840 has a tube or pipe 832 extending therefrom for receiving the electric wire typically extending from the piezoelectric module to the sensors in a nearby secondary capsule. The capsule 840 comprises a container portion 838 and a lid 850 securely mounted thereto. The piezoelectric generator comprises a base 866 a cantilevered mass 836 extending from a strip 834, preferably a metallic one, hanging from the base 866. The lid 850 is generally secured to the container portion 838 through the use of fasteners 868.

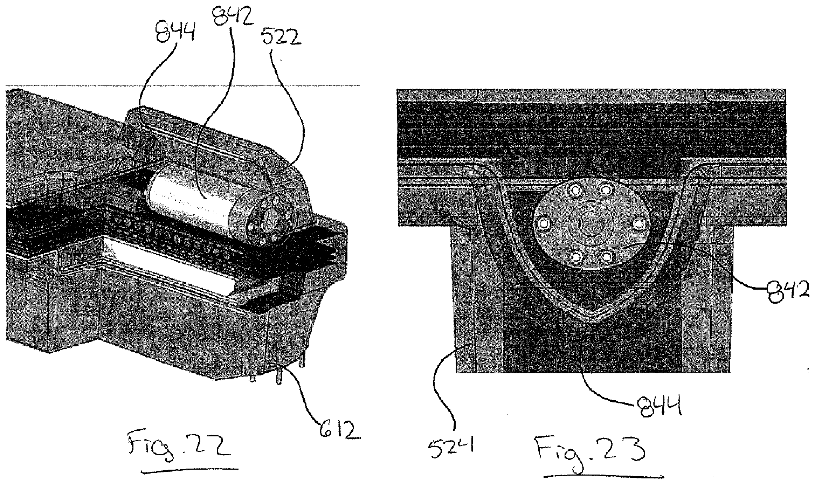

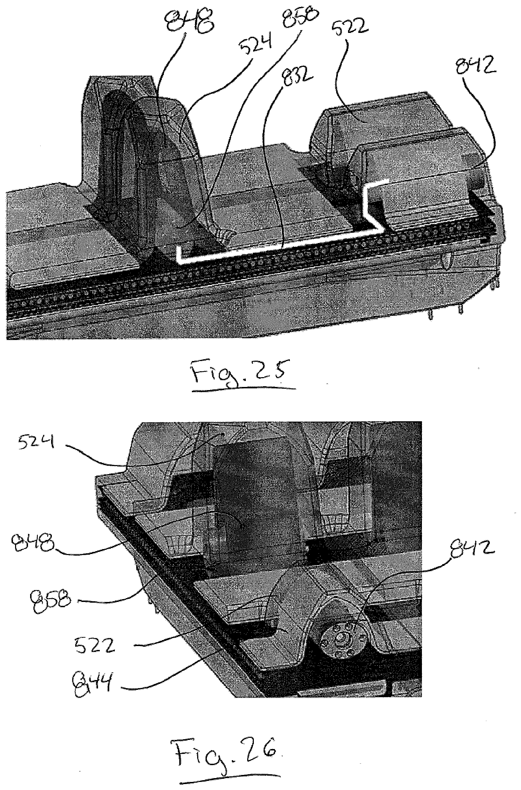

According to one embodiment, now referring to Fig. 22-26, the smart track system comprises an embedded sensor and a power source, the sensor and power source being interconnected. The embedded sensor system comprises a first capsule 842, a second capsule 858 interconnected by a tube or pipe 832. The first capsule 842 generally houses electronics and sensors such as a condenser, a converter for converting the thermocouple information in temperature values, a transmitter for transmitting data to the vehicle or user and a processor. The second capsule 858 houses the piezoelectric generator itself comprising a power cable (not shown), a base 866 (See Figs. 20-21), a cantilevered mass 836 (See Figs. 20-21) extending from strip 834 (See Figs. 20-21), preferably a metallic one, hanging from the base 866. The power cable (not shown) is generally channelled through the tube or pipe 832 from the first capsule 842 to the second 858. The sensors may comprise a thermocouple (not shown) extending from the first capsule 842 into the track. The sensors may further comprise a magnetometer, an accelerometer, a gyroscope and a geolocation emitter. According to one embodiment, the second capsule 858 is preferably inserted in the guide lug 524 below a first reinforcing element 848 (see Fig. 25). The first capsule 842 is preferably embedded in one drive lug 522, underneath a reinforcing element 844.

According to yet another embodiment, the smart track system may comprise a track having track pad. In this embodiment, the metallic track has a track pad 982 made from elastomeric material which is in contact with the ground. The sensors 980 are inserted in the elastomeric portion 982 of the track.

According to yet another embodiment, the smart track system is configured to use the track temperature in combination with GPS system and coordinates to compute an average driving speed that will allow the vehicle to reach its final destination without overheating the track. As such, the smart track system may use the track temperature obtained from the sensor to continuously adjust the vehicle speed according to the number of kilometers left in the determined route.

According to yet another embodiment, the smart track for a track assembly for a vehicle, comprises a body having an outer ground engaging side and an inner side opposite to the ground engaging side and a first sensor mounted within the track, the sensor sensing rotation of the track around the track assembly. According to this embodiment, the sensor is configured to compute the distance traveled by the track. In addition, the smart track sensor is further configured to compute time of use of the track by computing a time value associated to the duration when the track was rotating around the traction assembly.

While illustrative and presently preferred embodiments of the invention have been described in detail hereinabove, it is to be understood that the invention is defined in the claims.

## Claims

1. A track system of a vehicle, the track system comprising:
a) a track (100) including a carcass (140) having an outer face (142) and an inner face (144), a plurality of drive lugs (124) on the inner face of the carcass;
b) a first idler wheel (220);
c) a frame (270);
d) a drive wheel (210);
e) an autonomously powered sensor,
wherein the autonomously powered sensor is embedded within the track, wherein the autonomously powered sensor is configured to sense at least one of the following parameters of the track: temperature, acceleration, angular moment, magnetic field or geolocation,
wherein the autonomously powered sensor comprises:
- at least one sensor (300) embedded in the drive lugs (124), and
- at least one sensor (320) embedded in the carcass (140).

2. The track system of claim 1, wherein the autonomously powered sensor comprises any one of a thermocouple, an accelerometer, an odometer, a gyroscope, a magnetometer or a GPS module.

3. The track system of claim 1, wherein the autonomously powered sensor further comprises at least one sensor embedded within the track in a guide lug, or in an external thread of the carcass.

4. The track system of claim 3, wherein the autonomously powered sensor is configured to measure at least one of:
a) external thread temperature; and
b) guide lug temperature.

5. The track system of claim 1, wherein the autonomously powered sensor comprises a computer chip that comprises information about the track make, model or serial number.

6. The track system of claim 1, wherein the autonomously powered sensor acquires data about usage of the track for informing a user on traveled distance of the track.

7. The track system of claim 1, wherein the track comprises guide lugs mounted on the inner face and traction lugs mounted on the outer face, and wherein the autonomously powered sensor comprises sensors embedded within the traction lugs, and the guide lugs.

8. The track system of claim 1, wherein the autonomously powered sensor is configured to sense rotation of the track and to compute a time of use of the track by computing a time value associated to the duration when the track was rotating.

9. The track system of claim 1, wherein the autonomously powered sensor is configured to sense a track temperature and the track system is configured to use the track temperature in combination with a GPS system and coordinates to compute an average driving speed.

10. The track system of claim 1, wherein the autonomously powered sensor is configured to sense a track temperature and the track system is configured to use the track temperature to continuously adjust the vehicle speed according to the number of kilometers left in the determined route.

## Patentansprüche

1. Kettensystem eines Fahrzeugs, wobei das Kettensystem Folgendes umfasst:
a) eine Kette (100), die einen Unterbau (140) beinhaltet, der eine Außenseite (142) und eine Innenseite (144) aufweist, wobei eine Vielzahl von Antriebsnasen (124) an der Innenseite des Unterbaus vorliegen;
b) ein erstes Laufrad (220);
c) einen Rahmen (270);
d) ein Antriebsrad (210);
e) einen autonom angetriebenen Sensor,
wobei der autonom angetriebene Sensor innerhalb der Kette eingebettet ist, wobei der autonom angetriebene Sensor so konfiguriert ist, dass er mindestens einen der folgenden Parameter der Kette erfasst: Temperatur, Beschleunigung, Drehimpuls, Magnetfeld oder Geoortung,
wobei der autonom angetriebene Sensor Folgendes umfasst:
- mindestens einen Sensor (300), der in den Antriebsnasen (124) eingebettet ist, und
- mindestens einen Sensor (320), der in dem Unterbau (140) eingebettet ist.

2. Kettensystem nach Anspruch 1, wobei der autonom angetriebene Sensor eines aus einem Thermoelement, einem Beschleunigungsmesser, einem Odometer, einem Gyroskop, einem Magnetometer oder einem GPS-Modul umfasst.

3. Kettensystem nach Anspruch 1, wobei der autonom angetriebene Sensor ferner mindestens einen Sensor umfasst, der innerhalb der Kette in einer Führungsnase oder in einem äußeren Strang des Unterbaus eingebettet ist.

4. Kettensystem nach Anspruch 3, wobei der autonom angetriebene Sensor so konfiguriert ist, dass er mindestens eines der Folgenden misst:
a) Außenstrangtemperatur; und
b) Führungsnasentemperatur.

5. Kettensystem nach Anspruch 1, wobei der autonom angetriebene Sensor einen Computerchip umfasst, der eine Information über die Kettenmarke, das Kettenmodell oder die Seriennummer umfasst.

6. Kettensystem nach Anspruch 1, wobei der autonom angetriebene Sensor Daten über die Nutzung der Kette erfasst, um einen Benutzer über eine zurückgelegte Strecke der Kette zu informieren.

7. Kettensystem nach Anspruch 1, wobei die Kette Führungsnasen, die an der Innenseite montiert sind, und Traktionsnasen, die an der Außenseite montiert sind, umfasst und wobei der autonom angetriebene Sensor Sensoren umfasst, die innerhalb der Traktionsnasen und der Führungsnasen eingebettet sind.

8. Kettensystem nach Anspruch 1, wobei der autonom angetriebene Sensor so konfiguriert ist, dass er eine Rotation der Kette erfasst und eine Nutzungszeit der Kette durch Berechnen eines Zeitwerts in Verbindung mit der Dauer, während der die Kette rotiert ist, berechnet.

9. Kettensystem nach Anspruch 1, wobei der autonom angetriebene Sensor so konfiguriert ist, dass er eine Kettentemperatur erfasst, und das Kettensystem so konfiguriert ist, dass es die Kettentemperatur in Kombination mit einem GPS-System und Koordinaten verwendet, um eine durchschnittliche Fahrgeschwindigkeit zu berechnen.

10. Kettensystem nach Anspruch 1, wobei der autonom angetriebene Sensor so konfiguriert ist, dass er eine Kettentemperatur erfasst und das Kettensystem so konfiguriert ist, dass es die Kettentemperatur verwendet, um ständig die Fahrzeuggeschwindigkeit gemäß der Anzahl von Kilometern, die auf der bestimmten Strecke verbleiben, anzupassen.

## Revendications

1. Système de piste d'un véhicule, le système de piste comprenant :
a) une piste (100) incluant une carcasse (140) comportant une face extérieure (142) et une face intérieure (144), une pluralité de pattes d'entraînement (124) sur la face intérieure de la carcasse ;
b) une première roue de renvoi (220) ;
c) un cadre (270) ;
d) une roue d'entraînement (210) ;
e) un capteur alimenté de manière autonome,
dans lequel le capteur alimenté de manière autonome est intégré dans la piste, dans lequel le capteur alimenté de manière autonome est configuré pour détecter au moins l'un des paramètres suivants de la piste : la température, l'accélération, le moment cinétique, le champ magnétique ou la géolocalisation,
dans lequel le capteur alimenté de manière autonome comprend :
- au moins un capteur (300) intégré dans les pattes d'entraînement (124), et
- au moins un capteur (320) intégré dans la carcasse (140).

2. Système de piste selon la revendication 1, dans lequel le capteur alimenté de manière autonome comprend l'un quelconque d'un thermocouple, d'un accéléromètre, d'un odomètre, d'un gyroscope, d'un magnétomètre ou d'un module GPS.

3. Système de piste selon la revendication 1, dans lequel le capteur alimenté de manière autonome comprend en outre au moins un capteur intégré à l'intérieur de la piste dans une patte de guidage, ou dans un filetage extérieur de la carcasse.

4. Système de piste selon la revendication 3, dans lequel le capteur alimenté de manière autonome est configuré pour mesurer au moins l'un :
a) de la température de filetage extérieure ; et
b) de la température de la patte de guidage.

5. Système de piste selon la revendication 1, dans lequel le capteur alimenté de manière autonome comprend une puce informatique qui comprend des informations sur la marque, le modèle ou le numéro de série de la piste.

6. Système de piste selon la revendication 1, dans lequel le capteur alimenté de manière autonome acquiert des données sur l'utilisation de la piste destinée à informer un utilisateur sur la distance parcourue de la piste.

7. Système de piste selon la revendication 1, dans lequel la piste comprend des pattes de guidage montées sur la face intérieure et des pattes de traction montées sur la face extérieure, et dans lequel le capteur alimenté de manière autonome comprend des capteurs intégrés dans les pattes de traction, et les pattes de guidage.

8. Système de piste selon la revendication 1, dans lequel le capteur alimenté de manière autonome est configuré pour détecter la rotation de la piste et pour calculer un temps d'utilisation de la piste en calculant une valeur de temps associée à la durée pendant laquelle la piste est en rotation.

9. Système de piste selon la revendication 1, dans lequel le capteur alimenté de manière autonome est configuré pour détecter une température de piste et le système de piste est configuré pour utiliser la température de piste en combinaison avec un système GPS et des coordonnées pour calculer une vitesse d'entraînement moyenne.

10. Système de piste selon la revendication 1, dans lequel le capteur alimenté de manière autonome est configuré pour détecter une température de piste et le système de piste est configuré pour utiliser la température de piste pour régler en continu la vitesse du véhicule en fonction du nombre de kilomètres restant sur l'itinéraire déterminé.
